(19) Europäisches Patentamt
European Patent Office
Office européen des brevets

(11) **EP 3 000 003 B1**

(12) **FASCICULE DE BREVET EUROPEEN**

(45) Date de publication et mention
de la délivrance du brevet:
**05.04.2017 Bulletin 2017/14**

(21) Numéro de dépôt: **14729943.2**

(22) Date de dépôt: **20.05.2014**

(51) Int Cl.:
**G05B 19/4097** *(2006.01)* **B29C 70/30** *(2006.01)*

(86) Numéro de dépôt international:
**PCT/FR2014/000109**

(87) Numéro de publication internationale:
**WO 2014/188085 (27.11.2014 Gazette 2014/48)**

(54) **PROCEDE DE DEFINITION DE TRAJECTOIRES DE FIBRE A PARTIR DE COURBES OU GRILLE DE CONTRAINTE**

VERFAHREN ZUM DEFINIEREN VON FASERPFADEN AUS EINEM BEDINGUNGSGITTER ODER BEDINGUNGSKURVEN

METHOD FOR DEFINING FIBRE PATHS FROM A CONSTRAINT GRID OR CONSTRAINT CURVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2013 FR 1301170**

(43) Date de publication de la demande:
**30.03.2016 Bulletin 2016/13**

(73) Titulaire: **Coriolis Software**
**56530 Queven (FR)**

(72) Inventeur: **MUNAUX, Olivier**
**F-56270 Ploemeur (FR)**

(56) Documents cités:
**EP-A1- 2 538 358 US-A- 5 041 179**

EP 3 000 003 B1

**Description**

La présente invention concerne la fabrication de pièces en matériau composite par des machines de drapage de fibres automatiques, et plus particulièrement un procédé de définition des trajectoires de fibre sur une surface de drapage pour machines de drapage automatique.

Il est connu de réaliser des pièces en matériau composite par des procédés dits de placement de fibres, en superposant plusieurs plis de fibres dans des directions différentes. Dans la présente, l'expression « placement de fibres » désigne le placement de mèches, dans lequel chaque pli est réalisé par dépose au contact sur un moule de bandes les unes à côté des autres, chaque bande étant formée de plusieurs mèches indépendantes disposées côté à côte, ainsi que le placement de bandes dans lequel chaque pli est réalisé par dépose au contact sur un moule de bandes les unes à côté des autres, chaque bande étant formée d'une seule mèche, de largeur plus importante que dans le cas de placement de mèches. Les mèches classiquement utilisées sont unidirectionnelles et comprennent une multitude de filaments. Les fibres déposées peuvent être pré-imprégnées de résine ou non. La technologie de placement de mèches, utilisant des mèches de plus faible largeur, permet de draper sur des surfaces de drapage de formes complexes. Les pièces sont fabriquées par des machines de placement automatiques, auxquelles il convient de fournir les trajectoires de fibres pour réaliser les plis. Dans le cas de placement de mèches, ces machines sont classiquement appelées machines de placement de fibres ou machines AFP (Automated Fiber Placement), et machines de placement de bandes ou machines ATP (Automated Tape Placement) dans le cas de placement de bandes.

Les trajectoires de fibre sont classiquement définies par logiciel au moyen d'une rosette, constituée d'un système d'axes associé à une méthode de transfert, qui permet de définir une direction de fibre en tout point d'une surface. Il existe aujourd'hui différentes rosettes, basées sur des méthodes de transfert différentes, qui sont reconnues et utilisées dans le secteur aéronautique en fonction de la surface de drapage, telles que par exemple la rosette cartésienne ou la rosette translation.

Chaque trajectoire est générée en définissant la direction de la trajectoire en différents points d'analyse de la surface de drapage, appelés également points de propagation, par transfert du système d'axes audit point d'analyse selon la méthode de transfert associée. Ces transferts du système d'axes pour les points de propagation nécessitent des temps de calcul qui peuvent s'avérer relativement longs, notamment dans le cas de surfaces complexes.

Les trajectoires obtenues sont ensuite classiquement soumises à une analyse de courbure, communément appelée analyse de « steering », et/ou une analyse de déviation angulaire. L'analyse de steering en un point d'analyse d'une trajectoire consiste à calculer la valeur du rayon de courbure moyen dans le plan tangent à la surface au point d'analyse.

Suivant ces résultats d'analyse, les trajectoires doivent être redéfinies manuellement pour adapter les trajectoires aux rayons de courbures minimaux acceptables ou réalisables avec une fibre donnée, et aux déviations angulaires maximales souhaitées par le concepteur de la pièce. De ce fait, la définition de trajectoires peut s'avérer longue et fastidieuse.

Dans le cas de surfaces de drapage non continues comprenant des renfoncements et/ou bossages, notamment pour la réalisation de renforts, le positionnement de renforts préfabriqués, le positionnement de nids d'abeille ou autres, la définition de trajectoires satisfaisantes au niveau de ces discontinuités s'avèrent compliquée, et nécessite de longues opérations manuelles.

Le document EP 2 538 358 A1 divulgue un procédé de définition de trajectoires de fibres sur une surface de drapage pour la fabrication de pièces en matériau composite de l'état de la technique.

Le but de la présente invention est de proposer une solution visant à pallier au moins l'un des inconvénients précités.

A cet effet, la présente invention propose un procédé de définition de trajectoires de fibres sur une surface de drapage pour la réalisation d'au moins un pli d'orientation théorique donnée, pour la réalisation de pièces en matériau composite par drapage de fibres, caractérisé en ce qu'il comprend la définition de courbes de contraintes, et/ou la définition d'au moins une grille de contraintes à partir de la définition de la surface de drapage avec association à chaque noeud de la grille de contraintes d'au moins un vecteur de contrainte, les courbes de contraintes et les vecteurs de contrainte étant représentatifs de contraintes géométriques, de contraintes de rayon de courbure géodésique, de contraintes de déviation angulaire et/ou de contraintes d'efforts, la direction d'une fibre en un point d'analyse de la surface de drapage, pour la définition de la trajectoire de ladite fibre pour au moins une orientation de plis, étant obtenue par calcul des poids normalisés de vecteurs de contrainte desdites courbes de contraintes et/ou par calcul des poids normalisés de vecteurs de contrainte de la dite grille de contraintes, et par pondération par lesdits poids normalisés desdits vecteurs de contrainte.

Selon l'invention, la définition des trajectoires est réalisée en tenant compte de contraintes de fabrication et/ou de conception, ces contraintes étant modélisées sous la forme de courbes de contraintes ou de vecteurs associés aux noeuds d'une grille de contraintes, la direction en un point d'analyse étant définie en appliquant une loi de pondération aux vecteurs de contrainte associés audit point d'analyse et issus desdites courbes de contraintes et/ou d'une grille de contraintes. Le procédé selon l'invention permet d'intégrer dès la définition des trajectoires, des contraintes de conception et/ou de fabrication, réduisant ainsi le temps de définition des trajectoires.

Le procédé selon l'invention peut être mis en oeuvre de manière automatique sous la forme d'un logiciel. Le procédé selon l'invention peut être utilisé pour la réalisation de pièces en matériau composite par drapage de fibres, que ce soit par drapage au contact, tel que par placement de mèches ou par placement de bandes, ou par drapage sans contact tel que par enroulement filamentaire. Le procédé selon l'invention présente un intérêt tout particulier dans le cas de placement de mèches sur des surfaces de drapage non planes.

Selon un mode de réalisation, les trajectoires sont réalisées directement à partir de la grille de contraintes ou des courbes de contraintes, chaque trajectoire de fibres est alors obtenue en définissant les directions de la fibre en plusieurs points d'analyse de la surface de drapage.

Selon un autre mode de réalisation, un champ vectoriel est réalisé à partir de la grille de contraintes ou des courbes de contraintes, telle que décrit dans la demande de brevet déposée par la demanderesse, et intitulée « Procédé de définition de trajectoire à partir d'un champ vectoriel ». Les trajectoires sont alors réalisées à partir dudit champ vectoriel.

Selon un mode de réalisation, dans le cas d'une grille de contraintes, le procédé comprend la définition d'une grille de contraintes, chaque maille de ladite grille de contraintes étant de préférence définie par quatre noeuds, et l'association à chaque noeud de la grille de contraintes d'au moins un vecteur de contrainte,
la direction d'une fibre en un point d'analyse de la surface de drapage étant obtenue par

- définition d'un point projeté par projection normale d'un point d'analyse sur la grille de contrainte,
- calcul des poids normalisés au point projeté des quatre noeuds,
- pondération des quatre vecteurs de contrainte par lesdits poids normalisés pour obtenir un vecteur au point projeté, et projection normale de ce vecteur au point d'analyse pour obtenir la direction de la fibre au point d'analyse.

Selon un mode de réalisation les vecteurs de contrainte de la grille de contraintes sont représentatifs de contraintes géométriques de la surface de drapage.

Selon un mode de réalisation, dans le cas de courbes de contraintes, le procédé comprend la définition d'au moins deux courbes de contraintes de préférence sur le maillage de la surface de drapage, la direction d'une fibre en un point d'analyse de la surface de drapage étant obtenue par

- projection normale d'un point d'analyse de ladite maille, sur les deux courbes de contraintes entre lesquelles ledit point d'analyse est positionné,
- définition auxdits points projetés de vecteurs de contrainte, tangents auxdites courbes de contraintes,
- calcul des poids normalisés des points projetés au point d'analyse;
- et pondération des deux vecteurs de contrainte par leurs poids normalisés respectifs pour obtenir la direction de la fibre au point d'analyse.

Selon un mode de réalisation, les courbes de contraintes sont représentatives de contraintes géométriques de la surface de drapage.

Selon un autre mode de réalisation, les courbes de contraintes sont représentatives de valeurs de déviation angulaire maximale, et sont obtenues à partir d'une grille dite de déviation angulaire, et de directions de référence. Ces directions de référence sont par exemple obtenues à partir d'une rosette classique, d'une grille de contraintes ou de courbes de contraintes, la grille de déviation angulaire servant à réorienter ces directions de référence dans des limites de déviation angulaire afin de se rapprocher des géodésiques et ainsi de limiter le rayon de courbure des fibres. Dans ce mode de réalisation, le procédé comprend la définition d'une grille de déviation angulaire, chaque maille de ladite grille de déviation angulaire étant définie de préférence par quatre noeuds, et l'association à chaque noeud de la grille de déviation angulaire d'au moins une valeur de déviation angulaire maximale, la définition d'une courbe de contraintes comprenant la définition de directions de propagation en différents points d'analyse de la surface de drapage, la définition d'une direction de propagation en un point d'analyse comprenant :

- l'obtention d'une première direction de référence audit point d'analyse du maillage de la surface de drapage à partir de données de direction associées à une méthode de transfert,
- la projection normale dudit point sur la grille de déviation angulaire,
- le calcul des poids normalisés au point projeté des quatre noeuds de la maille de la grille de déviation angulaire,
- la pondération desdites quatre valeurs de déviation angulaire maximale de la maille par lesdits poids normalisés pour obtenir une valeur de déviation angulaire maximale associée audit point d'analyse,
- la réorientation de ladite de première direction de référence à partir de ladite valeur de déviation angulaire maximale pour obtenir la direction de propagation audit point d'analyse.

Selon un mode de réalisation, ladite étape de réorientation de la direction de référence comprend

- la définition d'un secteur de tolérance autour de la première direction de référence en définissant des directions limites à un angle de plus ou moins la valeur de déviation angulaire maximale associée audit point d'analyse,
- la détermination d'une direction géodésique audit point d'analyse,
- la direction de propagation au point de propagation est égale à la direction géodésique si la direction géodésique est incluse dans le secteur de tolérance, et est égale à la direction limite la plus proche de la direction géodésique, si la direction géodésique n'est pas incluse dans le secteur de tolérance.

Selon un mode de réalisation, le procédé comprend la définition d'un maillage de transfert élément finis d'une surface de transfert correspondant à une surface simplifiée, sensiblement continue, de la surface de drapage, la direction d'une fibre en un point d'analyse de la surface de drapage étant obtenue par

- définition d'un point projeté obtenu par projection normale d'un point d'analyse sur le maillage de transfert,
- définition d'une deuxième direction de référence audit point projeté, à partir de données de direction associées à une méthode de transfert,
- définition de la normale à la maille de transfert,
- définition d'un plan de coupe ledit plan de coupe étant défini par le point projeté, ladite deuxième direction de référence et ladite normale,
- définition de la ligne d'intersection du plan de coupe avec le plan de la maille, la direction de la fibre audit point d'analyse étant obtenue à partir de la direction de cette ligne d'intersection.

L'utilisation d'une telle surface de transfert simplifiée pour le transfert de données de direction s'avère particulièrement efficace pour définir des trajectoires acceptables en terme de rayon de courbure et de déviation angulaire dans le cas de surfaces de drapage non continues, présentant des renfoncements et/ou des bossages générant des rampes.

Dans le cas de l'utilisation d'une grille de déviation angulaire en combinaison avec une grille de contraintes, la première direction de référence au point d'analyse est obtenue à partir d'une grille de contraintes par

- définition d'un point projeté par projection normale dudit point d'analyse, sur la grille de contrainte,
- calcul des poids normalisés au point projeté des quatre noeuds,
- pondération des quatre vecteurs de contrainte par lesdits poids normalisés pour obtenir un vecteur audit point projeté, la première direction de référence étant obtenue par projection dudit vecteur au point d'analyse.

Dans le cas de l'utilisation d'une surface de transfert en combinaison avec une grille de déviation angulaire, la première direction de référence au point d'analyse est obtenue à partir d'une surface de transfert, par

- définition d'un point projeté par projection normale du point d'analyse de ladite maille, sur le maillage de transfert,
- définition d'une deuxième direction de référence audit point projeté,
- définition de la normale à la maille de transfert,
- définition d'un plan de coupe ledit plan de coupe étant défini par le point projeté, ladite deuxième direction de référence et ladite normale,
- définition de la ligne d'intersection du plan de coupe avec le plan de la maille, la première direction de référence correspondant à la direction de cette ligne d'intersection.

Dans le cas de l'utilisation d'une surface de transfert en combinaison avec une grille de contraintes et éventuellement une grille de déviation angulaire, la deuxième direction de référence audit point projeté est obtenue à partir d'une grille de contraintes par

- définition d'un deuxième point projeté par projection normale du point de la maille de transfert, sur la grille de contraintes,
- calcul des poids normalisés au deuxième point projeté de la maille de la grille de contraintes des quatre noeuds de ladite maille,
- pondération des quatre vecteurs de contrainte par lesdits poids normalisés pour obtenir un vecteur audit deuxième point projeté, la deuxième direction de référence étant obtenue par projection dudit vecteur au point projeté de la maille de transfert.

Dans le cas de l'utilisation d'une grille de déviation angulaire en combinaison avec des courbes de contraintes, obtenues par exemple à partir de contraintes géométriques, la première direction de référence au point d'analyse est obtenue à partir d'une grille de contraintes par

- projection normale du point d'analyse sur les deux courbes de contraintes entre lesquelles ledit point d'analyse est positionné,
- définition auxdits points projetés de vecteurs de contrainte tangents auxdites courbes de contraintes,
- calcul des poids normalisés des points projetés au point d'analyse;
- et pondération des deux vecteurs de contrainte par leurs poids normalisés respectifs pour obtenir un vecteur qui correspond à ladite première direction de référence.

Dans le cas de l'utilisation d'une surface de transfert en combinaison avec des courbes de contraintes, obtenues par exemple à partir de contraintes géométriques, et éventuellement une grille de déviation angulaire, la deuxième direction de référence audit point projeté est obtenue à partir d'une grille de contraintes par

- définition de seconds points projetés par projection normale dudit point projeté de la maille de transfert sur les deux courbes de contraintes entre lesquelles ledit point projeté est positionné,
- définition auxdits seconds points projetés de vecteurs de contrainte tangents auxdites courbes de contraintes,
- calcul des poids normalisés des seconds points projetés des courbes de contraintes au point projeté ;
- pondération des deux vecteurs de contrainte par leurs poids normalisés respectifs pour obtenir un vecteur, la deuxième direction de référence correspondant audit vecteur.

Suivant la surface de drapage, des courbes de contraintes et/ou une grille de contraintes définies pour une orientation de pli peuvent être utilisées pour les autres orientations. Dans ce cas, une fois les directions de fibres définies pour une première orientation de pli, par exemple 0°, les directions des fibres pour les autres orientations de plis, par exemple, 90°, +/- 45°, sont obtenues par simple rotation des vecteurs obtenus pour la première direction.

La présente invention a également pour objet un procédé de fabrication de pièces en matériau composite par une machine de drapage de fibres automatique, caractérisé en ce que les trajectoires de fibres pour le drapage de plis par la machine de drapage sont définies par le procédé de définition de trajectoire décrit précédemment.

La présente invention a également pour objet un programme d'ordinateur comportant un ensemble d'instructions aptes à mettre en oeuvre le procédé de définition de trajectoire tel que décrit précédemment, lorsque ledit programme est exécuté sur un ordinateur.

L'invention sera mieux comprise, et d'autres buts, détails, caractéristiques et avantages apparaîtront plus clairement au cours de la description explicative détaillée qui va suivre de plusieurs modes de réalisation particuliers actuellement préférés de l'invention, en référence aux dessins schématiques annexés, sur lesquels :

- la figure 1 est un schéma général illustrant différents modes de réalisation du procédé selon l'invention ;
- la figure 2 est une vue en perspective d'un exemple de surface de drapage utilisée pour illustrer le procédé selon l'invention ;
- la figure 3 est un schéma illustrant un procédé de définition de trajectoires, utilisant un champ vectoriel obtenu à partir d'une rosette classique ;
- la figure 4 est une vue en perspective du champ vectoriel obtenu selon le procédé de la figure 3 ;
- la figure 5 est une vue agrandie partielle de la figure 4 ;
- la figure 6A est une vue en perspective de trajectoires de fibre pour un pli à 0°, obtenues à partir du champ vectoriel de la figure 4, et la figure 6B est une analyse de rayon courbure desdites trajectoires ;
- la figure 7A est une vue en perspective des trajectoires de fibres pour un pli à 90°, obtenues à partir du champ vectoriel de la figure 4, et la figure 7B est une analyse de rayon de courbure desdites trajectoires ;
- la figure 8 est un schéma illustrant un procédé de définition de trajectoires, selon premier mode de réalisation de l'invention, utilisant un champ vectoriel obtenu à partir d'une grille de vecteurs de contrainte ;
- la figure 9 est une vue schématique en perspective de la grille de contraintes définie à partir de la surface de drapage ;
- la figure 10 est un schéma illustrant la méthode de définition du vecteur directeur d'une maille à partir d'un point projeté sur la grille de contraintes ;
- la figure 11 est une vue en perspective du champ vectoriel obtenu selon le procédé de la figure 8, avec la grille de contraintes de la figure 9, et la figure 12 est une vue agrandie partielle de la figure 11 ;
- la figure 13A est une vue en perspective des trajectoires de fibres pour un pli à 0° obtenues à partir du champ vectoriel de la figure 11, la figure 13B étant une analyse de rayon courbure desdites trajectoires ;
- la figure 14A est une vue en perspective des trajectoires de fibres pour un pli à 90° obtenues à partir du champ vectoriel de la figure 11, et la figure 14B est une analyse de rayon de courbure desdites trajectoires ;
- la figure 15 est un schéma illustrant un procédé de définition de trajectoires, selon un deuxième mode de réalisation de l'invention, utilisant un champ vectoriel obtenu à partir de courbes de contraintes ;

- la figure 16 est un schéma illustrant la méthode de définition d'un vecteur directeur du champ vectoriel à partir de courbes de contraintes ;
- la figure 17 est un schéma illustrant un procédé de définition de trajectoires, selon troisième mode de réalisation de l'invention, utilisant un champ vectoriel obtenu à partir de courbes de contraintes, lesdites courbes de contraintes étant obtenues à partir d'une grille de déviation angulaire ;
- la figure 18 est une vue schématique en perspective de la grille de déviation angulaire définie à partir de la surface de drapage ;
- la figure 19 est un schéma illustrant la méthode pour générer les courbes de contraintes à partir de la grille de déviation angulaire de la figure 18 ;
- la figure 20 est une vue de courbes de contraintes générées à partir de la grille de déviation angulaire de la figure 18 et d'une rosette classique ;
- la figure 21 est un schéma illustrant la méthode pour définir le vecteur directeur d'une maille à partir des courbes de déviation angulaire ;
- la figure 22 est une vue partielle du champ de vecteur obtenu à partir de la grille de déviation angulaire ;
- la figure 23 est une analyse de rayon de courbure de trajectoires obtenues à partir du champ vectoriel de la figure 22 pour un pli à 90°;
- la figure 24 est un schéma illustrant un procédé de définition de trajectoires, selon un quatrième mode de réalisation de l'invention, utilisant un champ vectoriel obtenu à partir d'une surface de transfert ;
- la figure 25 est un schéma illustrant la méthode de définition d'un vecteur directeur du champ vectoriel à partir d'une surface de transfert ;
- la figure 26A est une vue en perspective de trajectoires de fibre obtenues avec une surface de transfert et une rosette cartésienne;
- la figure 26B est une vue agrandie partielle de la figure 26A ;
- la figure 27 est une vue analogue à celle de la figure 26B, les trajectoires étant obtenues sans utilisation de la surface de transfert ;
- la figure 28 est un schéma de principe d'un procédé de définition de trajectoires, selon un autre mode de réalisation de l'invention, utilisant un champ vectoriel obtenu à partir d'une grille de déviation angulaire et d'une surface de transfert ;
- la figure 29 est un schéma illustrant la méthode de définition d'une direction de référence pour la définition d'une direction de propagation pour le procédé de la figure 28 ; et,

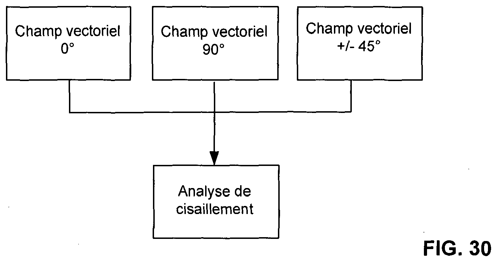

- la figure 30 est un schéma illustrant une étape d'analyse de cisaillement à partir de plusieurs champs vectoriels.

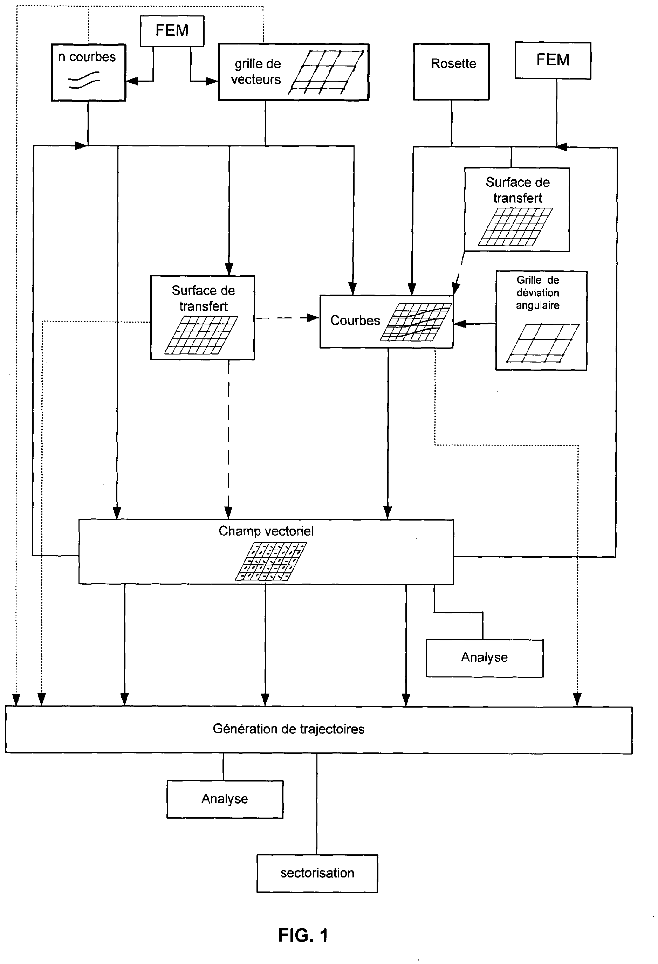

Selon l'invention, tel que représenté sur la figure 1, les trajectoires de fibres sont définies à partir de courbes de contraintes et/ou d'une grille de contraintes, éventuellement en combinaison avec l'utilisation d'une surface de transfert et/ou de courbes de contraintes obtenues à partir d'une grille de déviation angulaire. Les trajectoires peuvent être générées en passant par un champ vectoriel constitué d'un maillage de la surface de drapage dans lequel un vecteur directeur est associé à chaque maille.

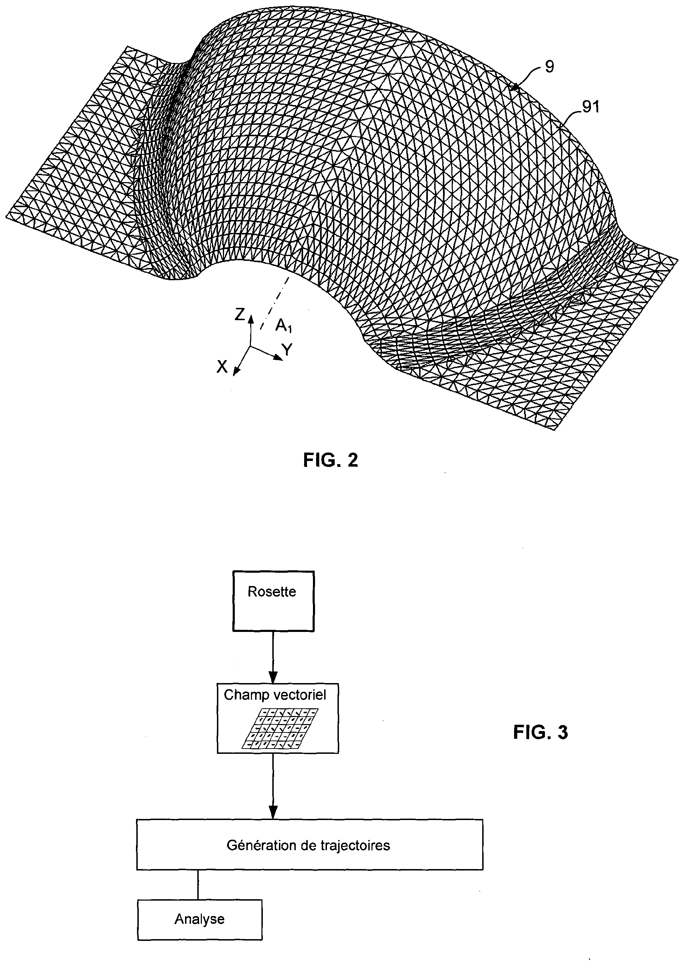

La figure 2 illustre une surface de drapage 9 utilisée à titre d'exemple pour illustrer différents modes de réalisation du procédé de définition de trajectoires de fibre selon l'invention. Cette surface de drapage est une surface à double courbure, et est définie par un maillage 91 éléments finis.

La figure 3 illustre un champ vectoriel est obtenu à partir d'une rosette classique, telle qu'une rosette cartésienne, comprenant un repère de référence défini par trois vecteurs orthogonaux X, Y, Z et une méthode de transfert cartésien. Dans le cas de la surface de drapage de la figure 2, le vecteur X de la rosette dite globale est aligné avec l'axe principal $A_1$ ou axe de révolution de la surface de drapage.

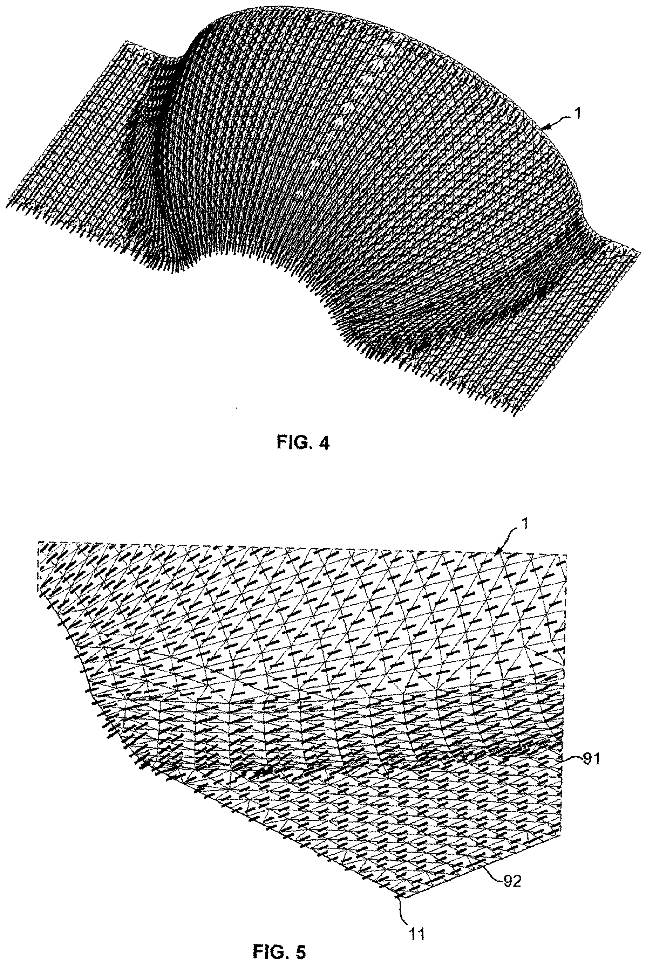

Le champ vectoriel est obtenu par transfert cartésien du vecteur X de la rosette globale sur chaque maille 92 du maillage, le transfert cartésien du vecteur X sur la maille consistant en une projection normale du vecteur X sur le plan de la maille concernée, le vecteur projeté de la rosette dite projetée constituant le vecteur directeur 11 de la maille. Les figures 4 et 5 illustrent le champ vectoriel 1 résultant.

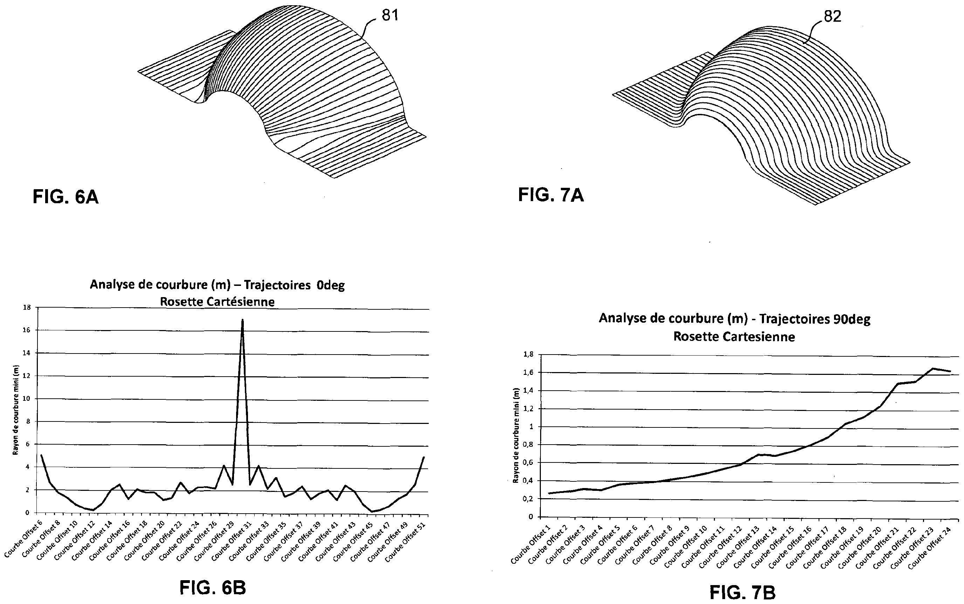

Des trajectoires 81 de fibre pour une orientation de pli à 0° peuvent ensuite être générées à partir de ce champ vectoriel 1, tel qu'illustré à la figure 6A. Chaque trajectoire est générée en définissant la direction de la trajectoire en différents points d'analyse, appelés également points de propagation, la direction en un point de propagation est celle du vecteur directeur de la maille à laquelle appartient ledit point de propagation.

Une analyse de rayon de courbure peut ensuite être effectuée sur ces trajectoires ainsi obtenues. La figure 6B illustre le rayon de courbure minimum de chaque trajectoire. Cette analyse de rayon de courbure montre des rayons de courbure importants, incompatibles par exemple avec le placement de mèches d'un quart de pouce de largeur, pour les lesquelles un rayon de courbure minimal d'environ 2 mètres est classiquement préconisé.

Une analyse de rayon de courbure et/ou de déviation angulaire peut être effectuée directement à partir du champ vectoriel, sans générer de trajectoires, cette analyse pouvant par exemple être visualisée sur le champ vectoriel en attribuant aux vecteurs des couleurs différentes en fonction des valeurs de rayon de courbure ou de déviation angulaire.

Des trajectoires de fibre pour d'autres orientations de pli, telles que 90°, +45° ou -45°, peuvent être générées à partir du même champ vectoriel 1, en effectuant une rotation correspondante des vecteurs directeurs. La figure 7A illustre des trajectoires de fibre pour une orientation de pli à 90°, obtenues en effectuant une rotation de 90° des vecteurs directeurs du champ vectoriel 1. La figure 7B illustre le rayon de courbure minimum de chaque trajectoire.

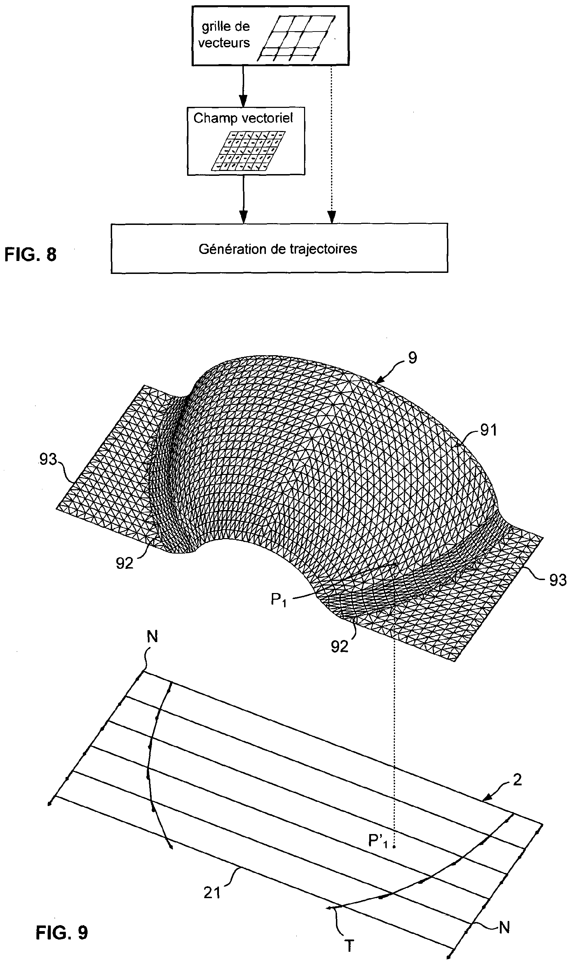

La figure 8 illustre un premier mode de réalisation de l'invention dans lequel un champ vectoriel est obtenu à partir d'une grille de contrainte, afin de prendre en compte des contraintes de conception et/ou de fabrication dans la définition des trajectoires, et ainsi obtenir des trajectoires avec des rayons de courbure acceptables.

En référence à la figure 9, on définit dans un premier temps une grille de contraintes 2, appelée également grille de vecteurs de contrainte. Dans cet exemple, la grille de contraintes est définie en fonction de contraintes géométriques de la surface de drapage, les contraintes géométriques étant ici les suivantes :

- les fibres de plis à 0° doivent suivre les génératrices 92 des rayons de raccordement entre la partie centrale globalement tronconique de la surface de drapage et les parties planes de part et d'autre de ladite partie tronconique, et
- les fibres de plis à 0° doivent être alignées avec les bords extérieurs 93 des parties planes.

Un maillage 21 est défini à partir de ces contraintes géométriques, chaque maille du maillage étant formée d'au moins quatre noeuds, puis un vecteur de contrainte T est assigné à chaque noeud N dudit maillage pour former la grille de contraintes 2.

Pour former le champ vectoriel, le vecteur directeur de chaque maille du maillage est défini de la manière suivante.

Tel qu'illustré à la figure 9, on effectue une projection normale du point central $P_1$ de la maille, au point le plus proche, sur la grille de contrainte.

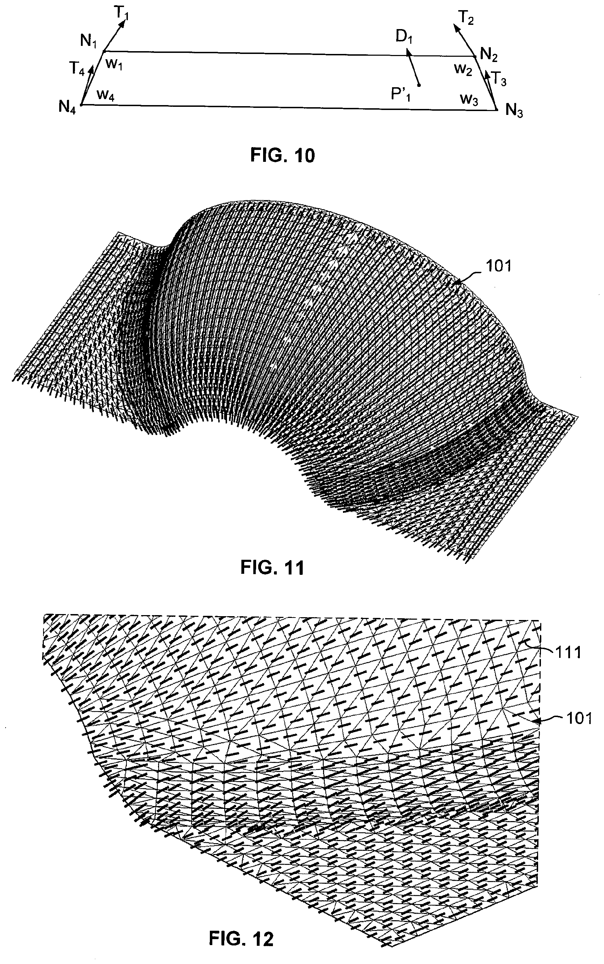

En référence à la figure 10, on effectue ensuite un calcul des poids normalisés $w_1$, $w_2$, $w_3$, $w_4$ au point projeté $P'_1$ des quatre noeuds $N_1$, $N_2$, $N_3$, $N_4$ qui sont associés audit point projeté, à savoir les quatre noeuds qui définissent la maille à laquelle ledit point projeté appartient. Ces poids normalisés, également appelés coordonnées barycentriques du point projeté, sont calculés selon une méthode connue en soi, en fonction de la distance entre ledit point projeté et lesdits noeuds. On détermine ensuite le vecteur $D_1$ au point projeté par pondération des quatre vecteurs $T_1$, $T_2$, $T_3$, $T_4$ par leurs poids normalisés respectifs $w_1$, $w_2$, $w_3$, $w_4$ :

$$D_1 = \| T_1 \text{ x } w_1 + T_2 \text{ x } w_2 + T_3 \text{ x } w_3 + T_4 \text{ x } w_4 \|$$

Le vecteur directeur de la maille est ensuite obtenu par un transfert par projection normale de ce vecteur $D_1$ au point central $P_1$ de la maille.

Les figures 11 et 12 illustrent le champ vectoriel 101 résultant, dans lequel un vecteur directeur 111 est associé à chaque maille.

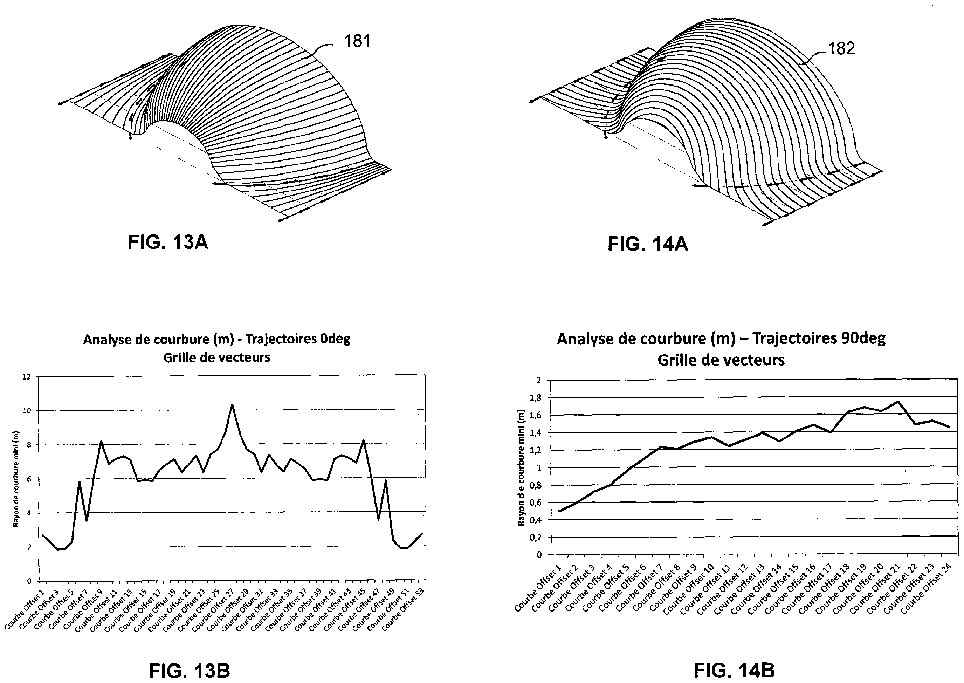

Les figures 13A et 13B illustrent respectivement les trajectoires 181 pour un pli à 0°, obtenues à partir de ce champ vectoriel, et les résultats de l'analyse de rayon de courbure correspondante. Les figures 14A et 14B illustrent respectivement les trajectoires 182 pour un pli à 90°, obtenues à partir de ce champ vectoriel, après une rotation de 90° des vecteurs directeurs, et les résultats de l'analyse de rayon de courbure correspondante. Des comparaisons des figures 6B et 7B avec respectivement les figures 13B et 14B montrent que les trajectoires obtenues avec la grille de contraintes présentent des rayons de courbure minimaux plus importants que ceux des trajectoires résultant d'une rosette cartésienne.

Selon une variante de réalisation de l'invention, tel qu'illustré par la flèche en traits discontinus sur la figure 8, les trajectoires sont générées directement à partir de la grille de contraintes, sans utiliser de champ vectoriel.

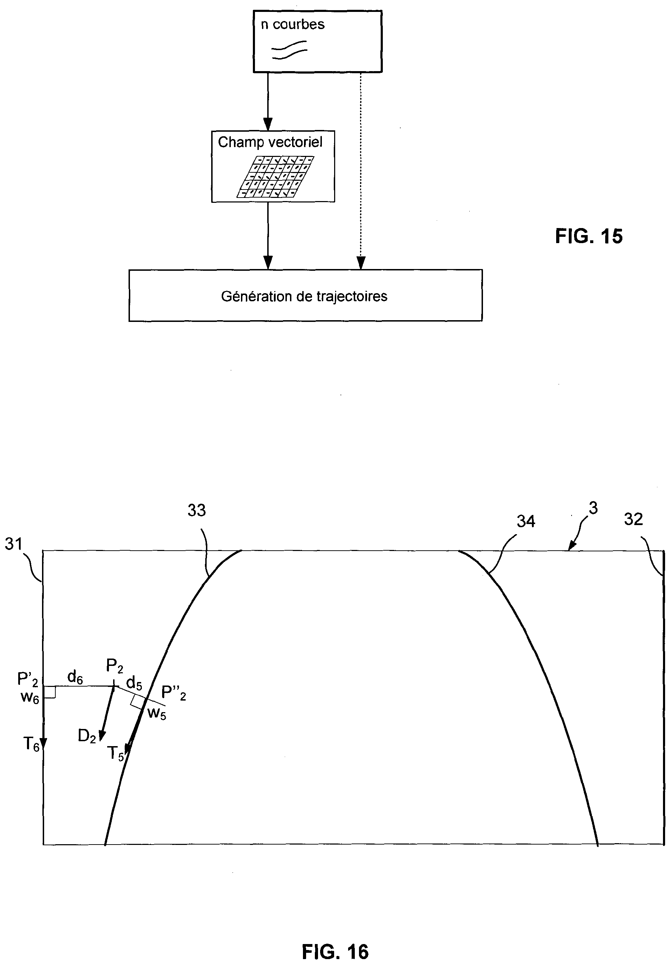

La figure 15 illustre un deuxième mode de réalisation dans lequel un champ vectoriel est obtenu à partir de courbes de contraintes. Les contraintes géométriques représentées sous la forme de la grille de contraintes 2 dans le mode de réalisation précédent sont ici représentées sous la forme de courbes de contraintes.

En référence à la figure 16, les courbes de contraintes, désignées globalement sous la référence 3, comprennent :

- deux courbes de contraintes 31, 32 linéaires correspondant aux bords extérieurs 93 de la surface de drapage, et
- deux courbes de contraintes 33, 34 incurvées correspondant à des génératrices de rayons de raccordement entre la partie centrale et les parties latérales de la surface de drapage.

Pour former le champ vectoriel, le vecteur directeur de chaque maille du maillage est défini de la manière suivante.

Considérant le point central $P_2$ d'une maille sur la figure 16, on effectue une projection normale dudit point central $P_2$ sur les deux courbes de contraintes 31, 33 les plus proches, entre lesquelles ledit point central est positionné. On définit ensuite auxdits points projetés $P'_2$ $P''_2$ les deux vecteurs $T_5$, $T_6$ tangents aux courbes. On calcule les poids normalisés $w_5$, $w_6$, au point central $P_2$ des deux points projetés, ces poids normalisés étant fonction des distances $d_5$ et $d_6$ entre le point central et les points projetés :

$$w_5 = 1 - (d_5 / (d_5 + d_6))$$

$$w_6 = 1 - (d_6 / (d_5 + d_6))$$

On définit ensuite le vecteur $D_2$, qui correspond au vecteur directeur de la maille, en pondérant les deux vecteurs tangents $T_5$, $T_6$ par leurs poids normalisés respectifs $w_5$, $w_6$ :

$$D_2 = \| T_5 \times w_5 + T_6 \times w_6 \|$$

Le vecteur $D_2$ de la maille correspond au vecteur directeur $D_2$ ainsi obtenu. Le champ vectoriel obtenu à partir de ces courbes de contraintes 3 est similaire de celui 101 obtenu précédemment au moyen de la grille de contraintes.

Selon une variante de réalisation de l'invention, tel qu'illustré par la flèche en traits discontinus sur la figure 15, les trajectoires sont générées directement à partir de la grille de contraintes.

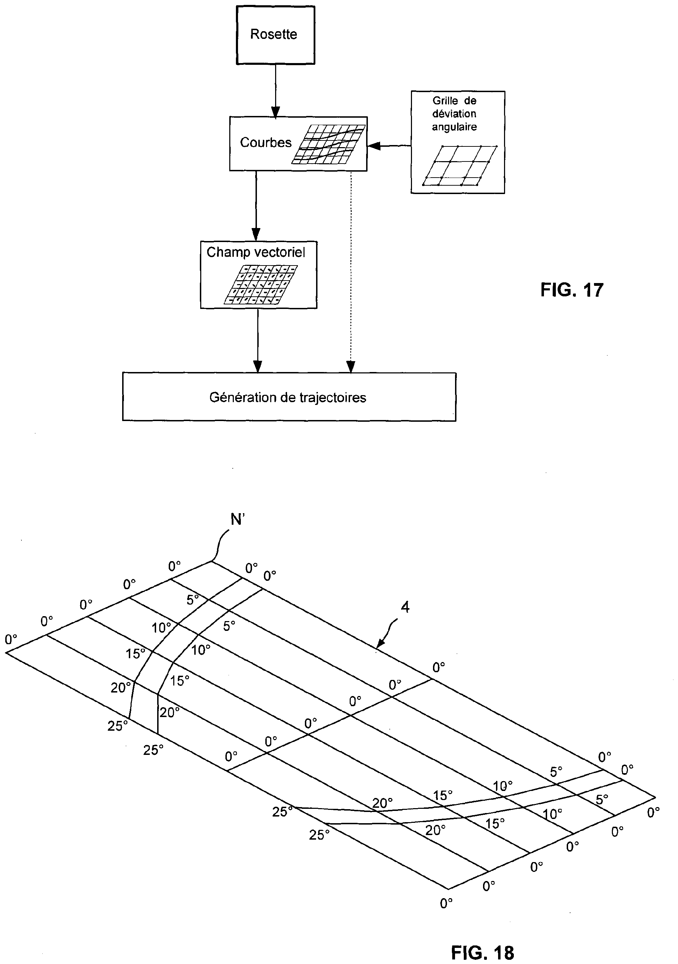

La figure 17 illustre un troisième mode de réalisation dans lequel un champ vectoriel est obtenu à partir de courbes de contraintes qui sont définies à partir d'une grille de déviation angulaire.

En référence à la figure 18, on définit dans un premier temps une grille de déviation angulaire 4, dans laquelle chaque maille est définie par quatre noeuds N', et on assigne à chaque noeud de la grille une valeur de déviation angulaire maximale. Un exemple de valeurs de déviation assignées aux différents noeuds est donné à la figure 18.

Des courbes de contraintes sont générées sur la surface de drapage en définissant pour chaque courbe de contraintes des directions de propagation en différents points d'analyse appelés également points de propagation. La direction de propagation en un point de propagation $P_3$ est définie de la manière suivante.

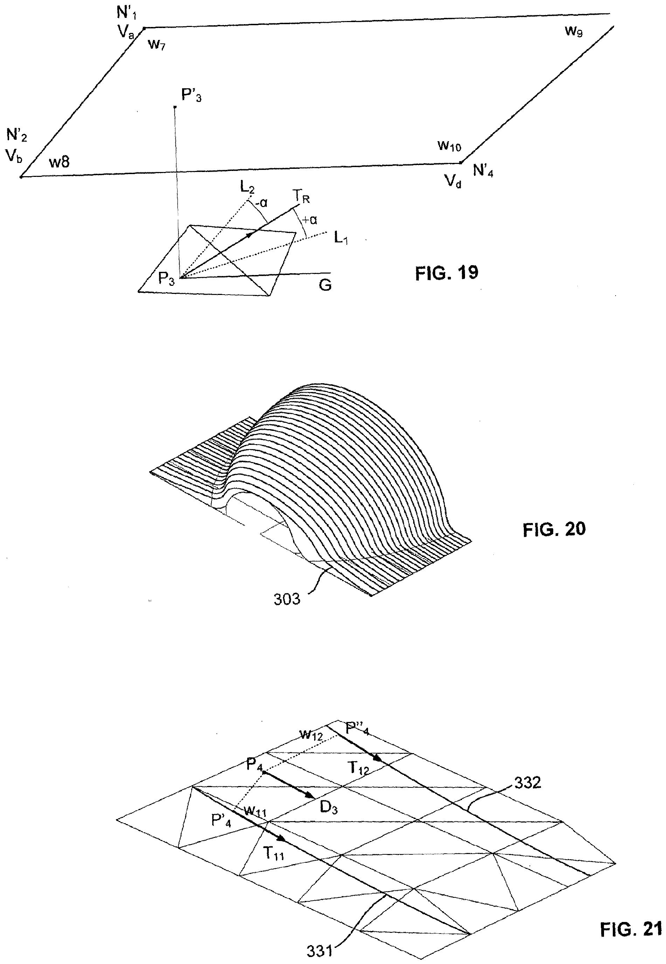

En référence à la figure 19, on définit une direction de référence audit point de propagation $P_3$, cette direction de référence $T_R$ étant dans ce mode de réalisation une direction obtenue par une rosette cartésienne, par transfert par projection normale du vecteur X de la rosette globale sur le plan de la maille de la surface de drapage à laquelle appartient ledit point de propagation $P_3$.

On effectue ensuite une projection normale dudit point $P_3$ sur la grille de déviation angulaire, le point projeté $P'_3$ appartenant par exemple à la maille de la grille définie par les quatre noeuds $N'_1$, $N'_2$, $N'_3$, $N'_4$. On effectue un calcul des poids normalisés $w_7$, $w_8$, $w_9$, $w_{10}$ au point projeté $P'_3$ des quatre noeuds. Ces poids normalisés, également appelés coordonnées barycentriques du point projeté, sont calculés selon une méthode connue en soi, en fonction de la distance entre ledit point projeté et lesdits noeuds. On effectue une pondération des quatre valeurs de déviation angulaire maximale $V_a$, $V_b$, $V_c$, $V_d$ par lesdits poids normalisés pour obtenir une valeur de déviation angulaire maximale $\alpha$ autorisée associée audit point projeté :

$$\alpha = w_7 \times V_a + w_8 \times V_b + w_9 \times V_c + w_{10} \times V_d$$

On détermine ensuite un secteur de tolérance autour de la direction de référence $T_R$ en définissant des directions limites $L_1$ et $L_2$ à un angle de $+\alpha$ et $-\alpha$ autour de la direction de référence. On détermine par ailleurs une direction géodésique G correspondant à la direction de propagation audit point de propagation $P_3$ d'une courbe géodésique.

On effectue ensuite une réorientation de la direction de référence dans les limites de la valeur de déviation angulaire autorisée. Si la direction géodésique G est incluse dans le secteur de tolérance, alors la direction de propagation au point de propagation est définie comme étant la direction géodésique. Si la direction géodésique n'est pas incluse dans le secteur de tolérance, alors la direction de propagation au point de propagation est définie comme étant la direction limite $L_1$ ou $L_2$ la plus proche de la direction géodésique.

La figure 20 illustre un exemple de courbes de contraintes, désignées sous la référence générale 303, obtenues pour des plis à 90°, à partir d'une rosette cartésienne et de la grille de déviation angulaire, avec les valeurs de déviation angulaire indiquées sur la figure 18.

L'obtention d'un champ vectoriel est réalisée selon la méthode décrite précédemment avec les courbes de contraintes 3 de la figure 16. Le vecteur directeur de chaque maille du maillage est défini de la manière suivante. En référence à la figure 21, on effectue une projection normale du point central $P_4$ de la maille sur les deux courbes de contraintes 331, 332 les plus proches. On définit ensuite auxdits points projetés $P'_4$, $P''_4$ les deux vecteurs $T_{11}$, $T_{12}$ tangents aux courbes. On calcule les poids normalisés $W_{11}$, $W_{12}$, au point central $P'$ des deux points projetés, ces poids normalisés étant fonction des distances entre le point central et les points projetés. On définit ensuite le vecteur $D_3$, de la maille, en pondérant les deux vecteurs tangents $T_{11}$, $T_{12}$ par leurs poids normalisés respectifs $w_{11}$, $w_{12}$ :

$$D_3 = \| w_{11} \ x \ T_{11} + w_{12} \ x \ T_{12} \|$$

Le vecteur directeur de la maille correspond audit vecteur $D_3$, de préférence après une rotation de 90° dudit vecteur $D_3$ pour avoir un champ vectoriel concernant par défaut les plis à 0°.

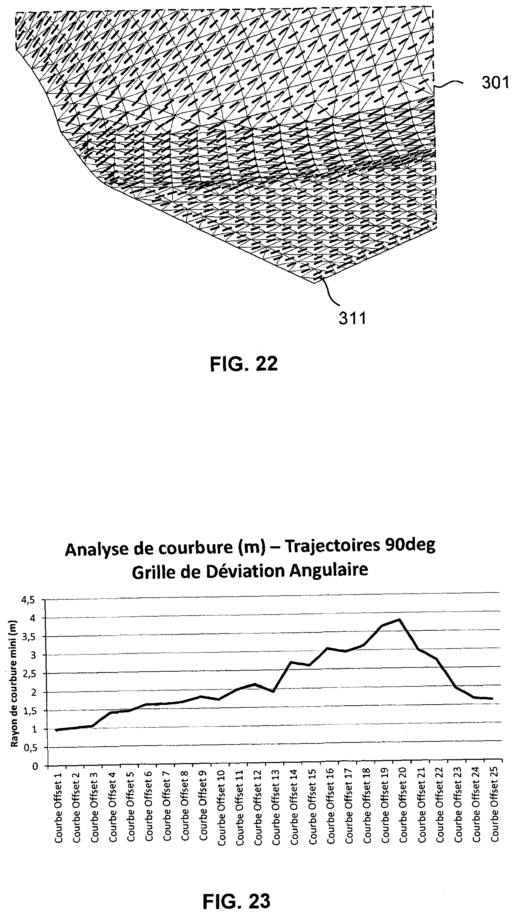

Le champ vectoriel 301 obtenu à partir de ces courbes de contraintes est illustré à la figure 22, le champ vectoriel comprenant un vecteur directeur 311 associé à chaque maille. Les résultats de l'analyse de rayon de courbure de trajectoires de fibres, obtenues à partir de ce champ vectoriel, ou correspondant aux courbes de contraintes 303 de la figure 20 sont illustrés à la figure 23. Ces résultats montrent une augmentation significative de rayons de courbure minimaux de trajectoires par rapport à ceux de trajectoires présentés à la figure 7B et obtenus simplement au moyen d'une rosette cartésienne.

Selon une variante de réalisation de l'invention, tel qu'illustré par la flèche en traits discontinus sur la figure 17, les trajectoires sont générées directement à partir de la grille de déviation angulaire, sans utiliser de champ vectoriel.

Selon un autre mode de réalisation de l'invention, le champ vectoriel est obtenu à partir d'une grille de vecteurs de contrainte et d'une grille de déviation angulaire. Dans ce cas, pour la génération des courbes de contraintes selon la méthode explicitée ci-dessus en référence à la figure 19, la définition de la direction de référence $T_R$ est réalisée, non pas à partir de la rosette cartésienne, mais à partir de la grille de vecteurs de contrainte, par projection normale du point $P_3$ sur la grille de contraintes et définition d'un vecteur $D_1$ selon la méthode de pondération explicitée précédemment en référence à la figure 10. La direction de référence $T_R$ de la maille est ensuite obtenue par un transfert par projection normale de ce vecteur $D_1$ au point $P_3$.

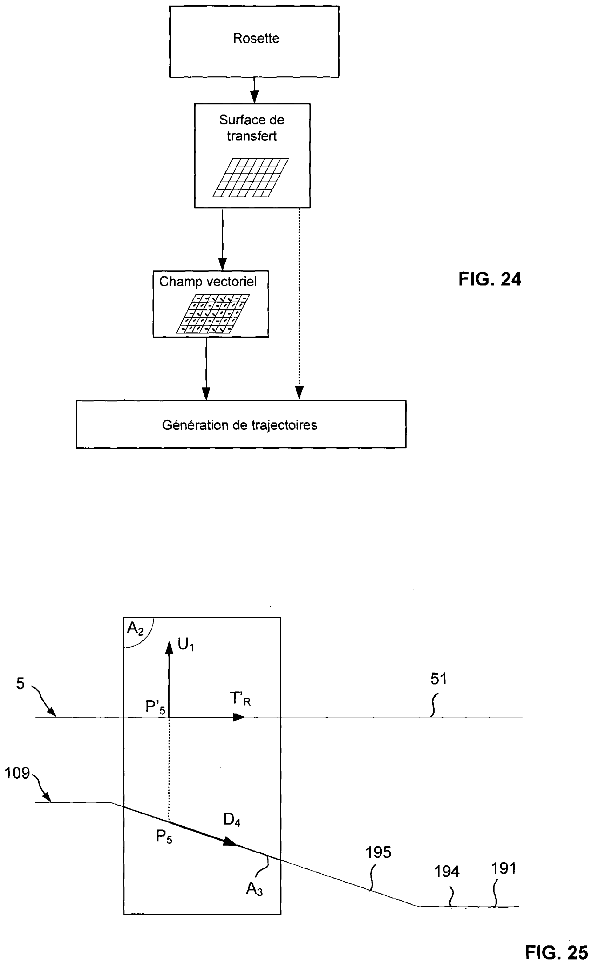

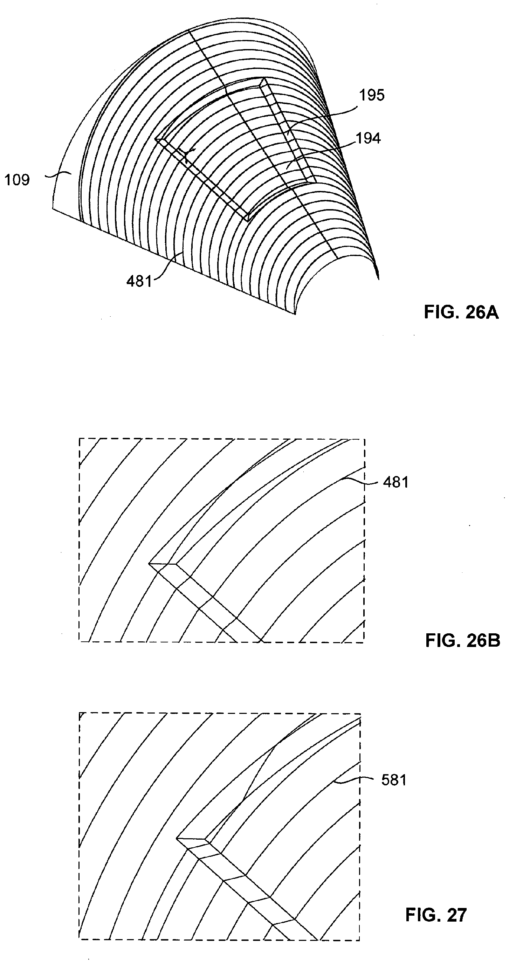

La figure 24 illustre un champ vectoriel obtenu en utilisant une surface de transfert pour le transfert d'une rosette cartésienne. Ce type de champ vectoriel est approprié pour la définition de trajectoires sur une surface de drapage non continue, telle que la surface de drapage 109 qu'illustrée à la figure 26A. Cette surface de drapage est de forme générale tronconique et comprend un renfoncement 194 central, formant des rampes 195.

On définit une surface dite de transfert continue qui correspond à une surface simplifiée de la surface de drapage. Dans le présent cas, la surface de transfert correspond à la surface de drapage sans son renfoncement central. Cette surface de transfert est définie par un maillage dit de transfert.

Pour former le champ vectoriel, le vecteur directeur de chaque maille du maillage 191 de la surface de drapage est défini de la manière suivante, en référence à la figure 25 :

- définition d'un point projeté $P'_5$ obtenu par projection normale du point central $P_5$ de ladite maille sur le maillage de transfert 51,
- définition d'une direction de référence $T'_R$ audit point projeté $P'_5$, ladite direction de référence provenant ici d'une rosette cartésienne et étant obtenue par transfert de l'axe X de la rosette sur le plan de la maille de transfert à laquelle appartient ledit point projeté $P'_5$ ;
- définition de la normale $U_1$ à la maille de transfert ; définition d'un plan de coupe $A_2$, ledit plan de coupe étant défini par le point projeté $P'_5$, ladite direction de référence $T'_R$ et ladite normale $U_1$, et
- définition de la ligne d'intersection $D_4$ du plan de coupe $A_2$ avec le plan $A_3$ de la maille à laquelle appartient le point central, le vecteur directeur de la maille correspondant à la direction de cette ligne d'intersection.

Les figures 26A et 26B illustrent des trajectoires 481 de plis à 90°, obtenues avec un tel champ vectoriel, après rotation de 90° des vecteurs directeurs. La figure 31 illustre les trajectoires 581 obtenues avec un champ vectoriel défini à partir d'un transfert de rosette directement sur la surface de drapage, sans utilisation de la surface de transfert.

Selon un autre mode de réalisation, le champ vectoriel est obtenu à partir d'une grille de vecteurs de contrainte et d'une surface de transfert. Dans ce cas, pour la définition du plan de coupe $A_2$ selon la méthode explicitée ci-dessus en référence à la figure 25, la définition de la direction de référence $T'_R$ est réalisée, non pas à partir de la rosette cartésienne, mais à partir de la grille de vecteurs de contrainte, par projection normale du point $P'_5$ sur la grille de contraintes et définition d'un vecteur $D_1$ selon la méthode de pondération explicitée précédemment en référence à la figure 10. Le vecteur de référence $T'_R$ de la maille est ensuite obtenu par un transfert par projection normale de ce vecteur $D_1$ au point $P'_5$.

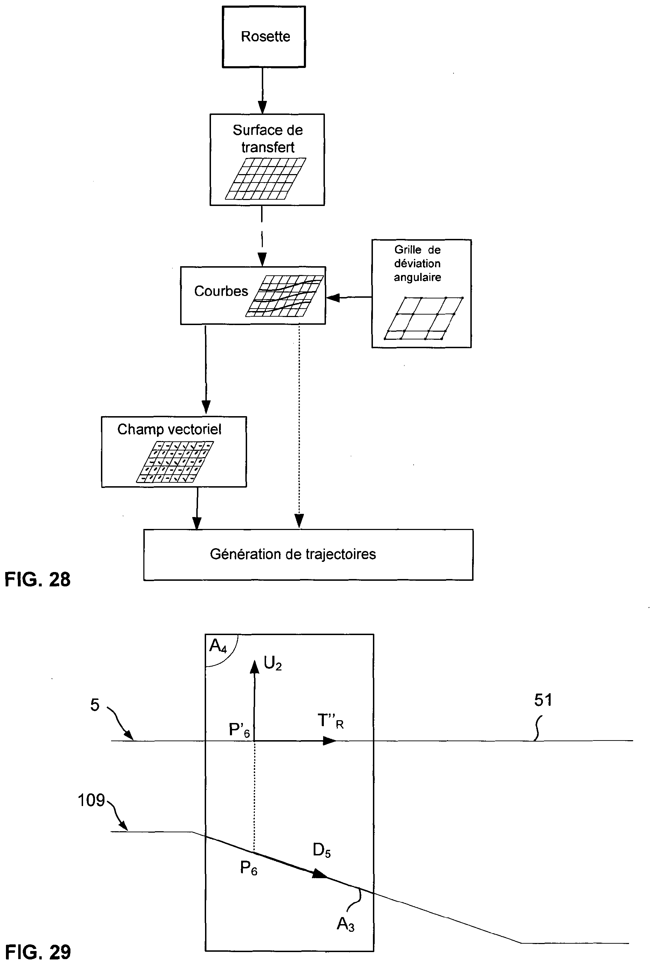

Selon un autre mode de réalisation illustré à la figure 28, le champ vectoriel est obtenu à partir d'une grille de déviation angulaire et d'une surface de transfert. Dans ce cas, pour la génération des courbes de contraintes selon la méthode explicitée ci-dessus en référence à la figure 19, la définition de la direction de référence $T_R$ pour chaque point de propagation $P_6$ est réalisée de la manière suivante, en référence à la figure 29 :

- définition d'un point projeté $P'_6$ obtenu par projection normale du point de propagation $P_6$ sur le maillage de transfert 5,
- définition d'une direction de référence $T''_R$ audit point projeté $P'_5$, ladite direction de référence provenant ici d'une rosette cartésienne et étant obtenue par transfert de l'axe X de la rosette sur le plan de la maille de transfert à laquelle appartient ledit point projeté $P'_6$;
- définition de la normale $U_2$ à la maille de transfert ;
- définition d'un plan de coupe $A_4$, ledit plan de coupe étant défini par le point projeté $P'_6$, la direction de référence $T''_R$ et la normale $U_2$,
- définition de la ligne d'intersection $D_5$ entre le plan de coupe $A_4$ et le plan $A_5$ de la maille, la direction de référence $T_R$ correspondant à la direction de cette ligne d'intersection.

La direction de propagation au point $P_6$ est ensuite obtenue tel que décrit précédemment en référence à la figure 19, en utilisant la valeur de déviation angulaire maximale obtenue à partir de la grille de déviation angulaire.

Selon autre mode de réalisation, le champ vectoriel est obtenu à partir d'une grille de vecteurs de contrainte, d'une grille de déviation angulaire et d'une surface de transfert. Dans ce cas, pour la définition du plan de coupe $A_4$ ci-dessus, la définition de la direction de référence $T''_R$ est effectuée, non pas à partir de la rosette cartésienne, mais à partir de la grille de vecteurs de contrainte, par projection normale du point $P'_6$ sur la grille de contraintes et définition d'un vecteur $D_1$ selon la méthode de pondération explicitée précédemment en référence à la figure 10. Le vecteur de référence $T''_R$ de la maille est ensuite obtenu par un transfert par projection normale de ce vecteur $D_1$ au point $P'_6$.

Selon d'autres modes de réalisation, tel qu'illustré à la figure 1, le champ vectoriel est obtenu à partir d'un maillage éléments finis FEM, comprenant des données de direction associées à chaque maille, tel qu'un maillage FEM provenant d'un logiciel de conception, par exemple le logiciel commercialisé sous la dénomination commerciale NASTRAN, avec au moins un angle associé à chaque maille, et une rosette associée audit maillage. Ce maillage FEM peut être utilisé directement en entrée du procédé selon l'invention, ou de préférence être transformé sous forme de grille de vecteurs ou de courbes de contraintes.

Par ailleurs, un champ vectoriel obtenu selon l'invention peut être réintroduit en entrée du procédé selon l'invention pour obtenir un nouveau champ vectoriel.

En fonction du type de surface de drapage, des champs vectoriels différents peuvent être utilisés pour la définition de trajectoires de plis d'orientations différentes. A titre d'exemple, en référence à la figure 28, trois champs vectoriels différents sont définis :

- champ vectoriel pour les plis à 0°
- champ vectoriel pour des plis à 90°
- champ vectoriel pour des plis à +/- 45°

L'utilisation de champ vectoriel permet d'effectuer rapidement des analyses de cisaillement, afin de vérifier que l'angle entre les trajectoires d'orientation différentes rentre bien dans une plage de valeur acceptable. Avantageusement, comme précédemment, les vecteurs directeurs des champs vectoriels sont tous définis pour une orientation à 0°. Dans le cas du champ vectoriel pour les plis à 90°, une rotation de 90° des vecteurs directeurs est effectuée pour générer des trajectoires à 90°. De même, dans le cas du champ vecteurs pour les plis à +/- 45°, une rotation de plus ou moins 45° des vecteurs directeurs est effectuée pour générer les trajectoires à +45° ou -45°. Ces différents champs vectoriels, avec des vecteurs directeurs définis pour une orientation à 0°, permet une comparaison rapide et aisée des vecteurs directeurs pour l'analyse de cisaillement.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Procédé de définition de trajectoires de fibres sur une surface de drapage pour la réalisation d'au moins un pli d'orientation théorique donnée, **caractérisé en ce qu'**il comprend la définition de courbes de contraintes (3, 303), et/ou la définition d'au moins une grille de contraintes (2) avec association à chaque noeud (N) de la grille de contraintes d'au moins un vecteur de contrainte (T), la direction d'une fibre en un point d'analyse de la surface de drapage étant obtenue par

calcul des poids normalisés ($w_5$, $w_6$, $w_{11}$, $w_{12}$) de vecteurs de contrainte ($T_5$, $T_6$ ; $T_{11}$, $T_{12}$) desdites courbes de contraintes (3, 303) et/ou par calcul des poids normalisés ($w_1$, $w_2$, $w_3$, $w_4$) de vecteurs de contrainte ($T_1$, $T_2$, $T_3$, $T_4$) de la dite grille de contraintes (2), et par pondération par lesdits poids normalisés desdits vecteurs de contrainte.

2. Procédé selon la revendication 1, **caractérisé en ce qu'**il comprend la définition d'une grille de contraintes (2), chaque maille de ladite grille de contraintes étant définie par quatre noeuds ($N_1$, $N_2$, $N_3$, $N_4$), et l'association à chaque noeud de la grille de contraintes d'au moins un vecteur de contrainte ($T_1$, $T_2$, $T_3$, $T_4$), la direction d'une fibre en un point d'analyse de la surface de drapage étant obtenue par

   - définition d'un point projeté ($P'_1$) par projection normale d'un point d'analyse ($P_1$) sur la grille de contraintes,
   - calcul des poids normalisés au point projeté des quatre noeuds ($N_1$, $N_2$, $N_3$, $N_4$),
   - pondération des quatre vecteurs de contrainte ($T_1$, $T_2$, $T_3$, $T_4$) par lesdits poids normalisés pour obtenir un vecteur ($D_1$) au point projeté, et projection normale de ce vecteur ($D_1$) au point d'analyse.

3. Procédé selon la revendication 1 ou 2, **caractérisé en ce qu'**il comprend la définition d'au moins deux courbes de contraintes, la direction d'une fibre en un point d'analyse de la surface de drapage étant obtenue par

   - projection normale d'un point d'analyse ($P_2$, $P_5$) de ladite maille, sur les deux courbes de contraintes (31, 32 ; 331, 332) entre lesquelles ledit point d'analyse est positionné,
   - définition auxdits points projetés ($P'_2$, $P''_2$ ; $P'_4$, $P''_4$) de vecteurs de contrainte ($T_5$, $T_6$, $T_{11}$, $T_{12}$) tangents auxdites courbes de contraintes,
   - calcul des poids normalisés des points projetés ($P'_2$, $P''_2$ ; $P'_4$, $P''_4$) au point d'analyse;
   - et pondération des deux vecteurs de contrainte par leurs poids normalisés respectifs.

4. Procédé selon la revendication 3, **caractérisé en ce qu'**il comprend la définition d'une grille de déviation angulaire (4), chaque maille de ladite grille de déviation angulaire étant définie par quatre noeuds (N'), et l'association à chaque noeud de la grille de déviation angulaire d'au moins une valeur de déviation angulaire maximale, la définition d'une courbe de contraintes (303) comprenant la définition de directions de propagation en différents points d'analyse, la définition d'une direction de propagation en un point d'analyse ($P_3$) comprenant :

   - l'obtention d'une première direction de référence ($T_R$) audit point d'analyse à partir de données de direction associées à une méthode de transfert,
   - la projection normale dudit point ($P_3$) sur la grille de déviation angulaire,
   - le calcul des poids normalisés ($w_7$, $w_8$, $w_9$, $w_{10}$) au point projeté ($P'_3$) des quatre noeuds ($N'_1$, $N'_2$, $N'_3$, $N'_4$) de la maille de la grille de déviation angulaire,
   - la pondération desdites quatre valeurs de déviation angulaire maximale ($V_a$, $V_b$, $V_c$, $V_d$) de la maille par lesdits poids normalisés pour obtenir une valeur de déviation angulaire maximale ($\alpha$) associée audit point d'analyse,
   - la réorientation de ladite de première direction de référence à partir de ladite valeur de déviation angulaire maximale ($\alpha$) pour obtenir la direction de propagation audit point d'analyse.

5. Procédé selon la revendication 4, **caractérisé en ce que** ladite étape de réorientation de la direction de référence comprend

   - la définition d'un secteur de tolérance autour de la première direction de référence ($T_R$) en définissant des directions limites ($L_1$, $L_2$) à un angle de plus ou moins la valeur de déviation angulaire maximale ($\alpha$) associée audit point d'analyse,
   - la détermination d'une direction géodésique (G) audit point d'analyse,
   - la direction de propagation au point de propagation est égale à la direction géodésique si la direction géodésique (G) est incluse dans le secteur de tolérance, et est égale à la direction limite ($L_1$, $L_2$) la plus proche de la direction géodésique, si la direction géodésique n'est pas incluse dans le secteur de tolérance.

6. Procédé selon l'une des revendications 1 à 5, **caractérisé en ce qu'**il comprend la définition d'un maillage de transfert d'une surface de transfert continue correspondant à une surface simplifiée de la surface de drapage, la direction d'une fibre en un point d'analyse de la surface de drapage étant obtenue par

- définition d'un point projeté (P'$_5$, P'$_6$) obtenu par projection normale d'un point d'analyse (P$_5$, P$_6$) sur le maillage de transfert (51),
- définition d'une deuxième direction de référence (T'$_R$, T"$_R$) audit point projeté (P'$_5$), à partir de données de direction associées à une méthode de transfert,
- définition de la normale (U$_1$, U$_2$) à la maille de transfert,
- définition d'un plan de coupe (A$_2$, A$_4$) ledit plan de coupe étant défini par le point projeté (P'$_5$, P'$_6$), ladite deuxième direction de référence (T'$_R$, T"$_R$) et ladite normale (U$_1$, U$_2$),
- définition de la ligne d'intersection (D$_4$, D$_5$) du plan de coupe (A$_2$, A$_4$) avec le plan (A$_3$, A$_5$) de la maille, la direction de la fibre audit point d'analyse étant obtenue à partir de la direction de cette ligne d'intersection.

7. Procédé selon la revendication 4 ou 5, en combinaison avec la revendication 2, **caractérisé en ce que** la première direction de référence (T$_R$) au point d'analyse (P$_3$) est obtenue à partir d'une grille de contraintes par

- définition d'un point projeté par projection normale dudit point d'analyse (P$_3$), sur la grille de contraintes,
- calcul des poids normalisés au point projeté des quatre noeuds,
- pondération des quatre vecteurs de contrainte par lesdits poids normalisés pour obtenir un vecteur (D$_1$) audit point projeté, la première direction de référence (T$_R$) étant obtenue par projection dudit vecteur au point d'analyse.

8. Procédé selon la revendication 6, en combinaison avec la revendication 4 ou 5, **caractérisé en ce que** la première direction de référence (T$_R$) au point d'analyse est obtenue à partir d'une surface de transfert, par

- définition d'un point projeté (P'$_6$) par projection normale du point d'analyse (P$_6$) de ladite maille, sur le maillage de transfert (51),
- définition d'une deuxième direction de référence (T"$_R$) audit point projeté (P'$_6$),
- définition de la normale (U$_2$) à la maille de transfert,
- définition d'un plan de coupe (A$_4$) ledit plan de coupe étant défini par le point projeté (P'$_5$), ladite deuxième direction de référence (T'$_R$) et ladite normale (U$_2$),
- définition de la ligne d'intersection (D$_5$) du plan de coupe (A$_4$) avec le plan (A$_5$) de la maille, la première direction de référence (T$_R$) correspondant à la direction de cette ligne d'intersection.

9. Procédé selon la revendication 6 ou 8, en combinaison avec la revendication 2, **caractérisé en ce que** la deuxième direction de référence (T'$_R$, T"$_R$) audit point projeté est obtenue à partir d'une grille de contraintes par

- définition d'un deuxième point projeté par projection normale du point (P'$_5$) de la maille de transfert, sur la grille de contraintes,
- calcul des poids normalisés au deuxième point projeté de la maille de la grille de contraintes des quatre noeuds de ladite maille,
- pondération des quatre vecteurs de contrainte par lesdits poids normalisés pour obtenir un vecteur (D$_1$) audit deuxième point projeté, la deuxième direction de référence (T'$_R$, T"$_R$) étant obtenue par projection dudit vecteur au point projeté de la maille de transfert.

10. Procédé de fabrication de pièces en matériau composite par une machine de drapage de fibres automatique, **caractérisé en ce que** les trajectoires de fibre pour le drapage de plis par la machine de drapage sont définies par le procédé selon l'une des revendications 1 à 9.

**Patentansprüche**

1. Verfahren zur Definition der Bahnen von Fasern auf einer Drapierfläche zur Herstellung von mindestens einer Schicht mit einer gegebenen theoretischen Ausrichtung, **dadurch gekennzeichnet, dass** es die Definition von Spannungskurven (3, 303) und/oder die Definition von mindestens einem Spannungsgitter (2) mit der Zuordnung zu jedem Knoten (N) des Spannungsgitters von mindestens einem Spannungsvektor (T) umfasst, wobei die Richtung einer Faser an einem Analysepunkt der Drapierfläche durch die Berechnung der normalisierten Gewichte (w5, w6, w11, w12) der Spannungsvektoren (T5, T6; T11, T12) der Spannungskurven (3, 303) und/oder durch die Berechnung der normalisierten Gewichte (w1, w2, w3, w4) der Spannungsvektoren (T1, T2, T3, T4) des Spannungsgitters (2) und durch Gewichtung der normalisierten Gewichte der Spannungsvektoren erhalten wird.

2. Verfahren nach Anspruch 1, **dadurch gekennzeichnet, dass** es die Definition eines Spannungsgitters (2) umfasst, wobei jede Masche des Spannungsgitters durch vier Knoten (N1, N2, N3, N4) und die Zuordnung zu jedem Knoten des Spannungsgitters von mindestens einem Spannungsvektor (T1, T2, T3, T4) definiert ist, wobei die Richtung einer Faser an einem Analysepunkt der Drapierfläche erhalten wird durch

- Definition eines projizierten Punkts (P'1) durch die normale Projektion eines Analysepunkts (P1) auf das Spannungsgitter,
- Berechnung der normalisierten Gewichte am projizierten Punkt der vier Knoten (N1, N2, N3, N4),
- Gewichtung der vier Spannungsvektoren (T1, T2, T3, T4) durch die normalisierten Gewichte, um einen Vektor (D1) am projizierten Punkt zu erhalten, und normale Projektion dieses Vektors (D1) an den Analysepunkt.

3. Verfahren nach Anspruch 1 oder 2, **dadurch gekennzeichnet, dass** es die Definition von mindestens zwei Spannungskurven umfasst, wobei die Richtung einer Faser an einem Analysepunkt der Drapierfläche erhalten wird durch

- normale Projektion eines Analysepunkts (P2, P5) der Masche auf den zwei Spannungskurven (31, 32; 331, 332) zwischen denen der Analysepunkt definiert ist,
- Definition an den projizierten Punkten (P'2, P''2; P'4, P''4) der Spannungsvektoren (T5, T6, T11, T12), die die Spannungskurven tangieren,
- Berechnung der normalisierten Gewichte der projizierten Punkte (P'2, P''2; P'4, P''4) an dem Analysepunkt;
- und Gewichtung der zwei Spannungsvektoren durch ihre jeweiligen normalisierten Gewichte

4. Verfahren nach Anspruch 3, **dadurch gekennzeichnet, dass** es die Definition eines Winkelabweichungsgitters (4) umfasst, wobei jede Masche des Winkelabweichungsgitters durch vier Knoten (N') definiert ist, sowie die Zuordnung zu jedem Knoten des Winkelabweichungsgitters von mindestens einem maximalen Winkelabweichungswerts, wobei die Definition einer Spannungskurve (303) die Definition von Ausbreitungsrichtungen an verschiedenen Analysepunkten umfasst, wobei die Definition einer Ausbreitungsrichtung an einem Analysepunkt (P3) Folgendes umfasst:

- Erhalt einer ersten Referenzrichtung (TR) an dem Analysepunkt ausgehend von Richtungsdaten, die einem Übertragungsverfahren zugeordnet sind,
- normale Projektion des Punkts (P3) auf das Winkelabweichungsgitter,
- Berechnung der normierten Gewichte (w7, w8, w9, w10) am projizierten Punkt (P'3) der vier Knoten (N'1, N'2, N'3, N'4) der Masche des Winkelabweichungsgitters,
- Gewichtung der vier maximalen Winkelabweichungswerte (Va, Vb, Vc, Vd) der Masche durch die normalisierten Gewichte, um einen maximalen Winkelabweichungswert ($\alpha$) zu erhalten, der dem Analysepunkt zugeordnet ist,
- Neuorientierung der ersten Referenzrichtung ausgehend von dem maximalen Winkelabweichungswert ($\alpha$), um die Ausbreitungsrichtung an dem Analysepunkt zu erhalten.

5. Verfahren nach Anspruch 4, **dadurch gekennzeichnet, dass** der Schritt des Neuorientierens der Referenzrichtung Folgendes umfasst

- Definieren eines Toleranzsektors um die erste Referenzrichtung (TR) durch Definieren von Richtungsbegrenzungen (L1, L2) mit einem Winkel von mehr oder weniger dem maximalen Winkelabweichungswert ($\alpha$), der dem Analysepunkt zugeordnet ist,
- Bestimmen einer geodätischen Richtung (G) an dem Analysepunkt,
- die Ausbreitungsrichtung am Ausbreitungspunkt ist gleich der geodätischen Richtung, wenn die geodätische Richtung (G) im Toleranzsektor enthalten ist und gleich der Richtungsbegrenzung (L1, L2), die der geodätischen Richtung am nächsten liegt, ist, wenn die geodätische Richtung nicht im Toleranzsektor enthalten ist.

6. Verfahren nach einem der Ansprüche 1 bis 5, **dadurch gekennzeichnet, dass** es die Definition einer Übertragungsvernetzung einer kontinuierlichen Übertragungsfläche umfasst, die einer vereinfachten Fläche der Drapierfläche entspricht, wobei die Richtung einer Faser an einem Analysepunkt der Drapierfläche erhalten wird durch

- Definition eines projizierten Punkts (P'5, P'6), der durch normale Projektion eines Analysepunkts (P5, P6) auf die Übertragungsvernetzung (51) erhalten wurde,
- Definition einer zweiten Referenzrichtung (T'R, T''R) an dem projizierten Punkt (P'5) ausgehend von Richtungsdaten, die einem Übertragungsverfahren zugeordnet sind,
- Definition der Normalen (U1, U2) zur Übertragungsmasche,
- Definition einer Schnittebene (A2, A4), wobei die Schnittebene durch den projizierten Punkt (P'5, P'6), die zweite Referenzrichtung (T'R, T''R) und die Normale (U1, U2) definiert ist,

- Definition der Schnittlinie (D4, D5) der Schnittebene (A2, A4) mit der Ebene (A3, A5) der Masche, wobei die Richtung der Faser am Analysepunkt ausgehend von der Richtung dieser Schnittlinie erhalten wird.

7. Verfahren nach Anspruch 4 oder 5 in Kombination mit Anspruch 2, **dadurch gekennzeichnet, dass** die erste Referenzrichtung (TR) am Analysepunkt (P3) ausgehend von einem Spannungsgitter erhalten wird durch

   - Definition eines projizierten Punkts durch die normale Projektion des Analysepunkts (P3) auf das Spannungsgitter,
   - Berechnung der normalisierten Gewichte am projizierten Punkt der vier Knoten,
   - Gewichtung der vier Spannungsvektoren durch die normalisierten Gewichte, um einen Vektor (D1) am projizierten Punkt zu erhalten, wobei die erste Referenzrichtung (TR) durch Projektion des Vektors am Analysepunkt erhalten wird.

8. Verfahren nach Anspruch 6 in Kombination mit Anspruch 4 oder 5, **dadurch gekennzeichnet, dass** die erste Referenzrichtung (TR) am Analysepunkt ausgehend von einer Übertragungsfläche erhalten wird durch

   - Definition eines projizierten Punkts (P'6) durch normale Projektion des Analysepunkts (P6) der Masche auf die Übertragungsvernetzung (51),
   - Definition einer zweiten Referenzrichtung (T''R) an dem projizierten Punkt (P'6),
   - Definition der Normalen (U2) an der Übertragungsmasche,
   - Definition einer Schnittebene (A4), wobei die Schnittebene durch den projizierten Punkt (P'5), die zweite Referenzrichtung (T'R) und die Normale (U2) definiert ist,
   - Definition der Schnittlinie (D5) der Schnittebene (A4) mit der Ebene (A5) der Masche, wobei die erste Referenzrichtung (TR) der Richtung dieser Schnittlinie entspricht.

9. Verfahren nach Anspruch 6 oder 8 in Kombination mit Anspruch 2, **dadurch gekennzeichnet, dass** die zweite Referenzrichtung (T'R, T''R) an dem projizierten Punkt ausgehend von einem Spannungsgitter erhalten wird durch

   - Definition eines zweiten projizierten Punkts durch normale Projektion des Punkts (P'5) der Übertragungsmasche auf das Spannungsgitter,
   - Berechnung der normalisierten Gewichte am zweiten projizierten Punkt der Masche des Spannungsgitters der vier Knoten der Masche,
   - Gewichtung der vier Spannungsvektoren durch die normalisierten Gewichte, um einen Vektor (D1) des zweiten projizierten Punkts zu erhalten, wobei die zweite Referenzrichtung (T'R, T''R) durch Projektion des Vektors auf den projizierten Punkt der Übertragungsmasche erhalten wird.

10. Verfahren zur Herstellung von Teilen aus Verbundmaterial durch eine Maschine zum automatischen Drapieren von Fasern, **dadurch gekennzeichnet, dass** die Faserbahnen für die Drapierung von Schichten durch die Maschine zum Drapieren durch das Verfahren nach einem der Ansprüche 1 bis 9 definiert sind.

**Claims**

1. Method for defining the trajectories of fibers on a layup surface for producing at least one ply having a given theoretical orientation, **characterized in that** it includes the definition of constraint curves (3, 303), and/or the definition of at least one constraint grid (2) with association of at least one constraint vector (T) to each node (N) of the constraint grid, the direction of a fiber at an analysis point of the layup surface being obtained by the calculation of the normalized weights ($w_5$, $w_6$, $w_{11}$, $w_{12}$) of the constraint vectors ($T_5$, $T_6$ ; $T_{11}$, $T_{12}$) of said constraint curves (3, 303) and/or by calculation of the normalized weights ($w_1$, $w_2$, $w_3$, $w_4$) of the constraint vectors ($T_1$, $T_2$, $T_3$, $T_4$) of said constraint grid (2), and by weighting of said constraint vectors by said normalized weights.

2. Method according to claim 1, **characterized in that** it includes the definition of a constraint grid (2), each element of said constraint grid being defined by four nodes ($N_1$, $N_2$, $N_3$, $N_4$), and the association of at least one constraint vector ($T_1$, $T_2$, $T_3$, $T_4$) to each node of the constraint grid, the direction of a fiber at an analysis point of the layup surface, being obtained by

   - definition of a projected point (P'$_1$) by normal projection of an analysis point (P$_1$) on the constraint grid,
   - calculation of the normalized weights, at the projected point, of the four nodes ($N_1$, $N_2$, $N_3$, $N_4$),

**14**

- weighting of the four constraint vectors ($T_1$, $T_2$, $T_3$, $T_4$) by said normalized weights to obtain a vector ($D_1$) at the projected point, and normal projection of this vector ($D_1$) at the analysis point.

3. Method according to claim 1 or 2, **characterized in that** it includes the definition of at least two constraint curves, the direction of a fiber at an analysis point of the layup surface, being obtained by

- normal projection of an analysis point ($P_2$, $P_5$) of said element, on the two constraint curves (31, 32; 331, 332) between which said analysis point is positioned,
- definition of said projected points ($P'_2$, $P''_2$ ; $P'_4$, $P''_4$), of the constraint vectors ($T_5$, $T_6$, $T_{11}$, $T_{12}$) tangent to said constraint curves,
- calculation of the normalized weights of the projected points ($P'_2$, $P''_2$ $P'_4$, $P''_4$) at the analysis point;
- and weighting of the two constraint vectors by their respective normalized weights.

4. Method according to claim 3, **characterized in that** it includes the definition of an angular deviation grid (4), each element of said angular deviation grid being defined by four nodes (N'), and the association to each node of the angular deviation grid of at least one maximum angular deviation value, the definition of a constraint curve (303) comprising the definition of propagation directions at different analysis points, the definition of a propagation direction at an analysis point ($P_3$) including:

- obtaining a first reference direction ($T_R$) at said analysis point from the direction data associated to a method for transfer,
- the normal projection of said point ($P_3$) on the angular deviation grid,
- calculation of the normalized weights ($w_7$, $w_8$, $w_9$, $w_{10}$) at the projected point ($P'_3$), of the four nodes ($N'_1$, $N'_2$, $N'_3$, $N'_4$) of the element of the angular deviation grid,
- weighting of said four maximum angular deviation values ($V_a$, $V_b$, $V_c$, $V_d$) of the element by said normalized weights to obtain a maximum angular deviation value ($\alpha$) associated to said analysis point,
- the reorientation of said first reference direction from said maximum angular deviation value ($\alpha$) to obtain the propagation direction at said analysis point.

5. Method according to claim 4, **characterized in that** said step of reorientation of the reference direction includes

- the definition of a tolerance sector around the first reference direction ($T_R$) by defining direction limits ($L_1$, $L_2$) at an angle of more or less the maximum angular deviation value ($\alpha$) associated to said analysis point,
- determining a geodesic direction (G) at said analysis point
- the propagation direction at the propagation point is equal to the geodesic direction if the geodesic direction (G) is included in the tolerance sector, and is equal to the direction limit ($L_1$, $L_2$) closest to the geodesic direction, if the geodesic direction is not included in the tolerance sector.

6. Method according to one of the claims 1 to 5, **characterized in that** it includes the definition of a transfer mesh of a continuous transfer surface corresponding to a simplified surface of the layup surface, the direction of a fiber at an analysis point of the layup surface being obtained by

- definition of a projected point ($P'_5$, $P'_6$) obtained by normal projection of an analysis point ($P_5$, $P_6$) on the transfer mesh (51),
- definition of a second reference direction ($T'_R$, $T''_R$) at said projected point ($P'_5$), from direction data associated to a method for transfer,
- definition of the normal ($U_1$, $U_2$) to the transfer element,
- definition of a cutting plane ($A_2$, $A_4$) said cutting plane being defined by the projected point ($P'_5$, $P'_6$), said second reference direction ($T'_R$, $T''_R$) and said normal ($U_1$, $U_2$),
- definition of the line of intersection ($D_4$, $D_5$) of the cutting plane ($A_2$, $A_4$) with the plane ($A_3$, $A_5$) of the element, the direction of the fiber at said analysis point being obtained from the direction of this line of intersection.

7. Method according to claim 4 or 5 in combination with claim 2, **characterized in that** the first reference direction ($T_R$) at the analysis point ($P_3$) is obtained from a constraint grid by

- definition of a projected point by normal projection of said analysis point ($P_3$) on the constraint grid,
- calculation of normalized weights, at the projected point, of the four nodes,
- weighting of the four constraint vectors by said normalized weights to obtain a vector ($D_1$) at said projected

point, the first reference direction ($T_R$) being obtained by projection of said vector at the analysis point.

8. Method according to claim 6, in combination with claim 4 or 5, **characterized in that** the first reference direction ($T_R$) at the analysis point is obtained from a transfer surface, by

- definition of a projected point ($P'_6$) by normal projection of the analysis point ($P_6$) of said element on the transfer mesh (51),
- definition of a second reference direction ($T''_R$) at said projected point ($P'_6$)
- definition of the normal ($U_2$) to the transfer element,
- definition of a cutting plane ($A_4$) said cutting plane being defined by the projected point ($P'_5$), said second reference direction ($T'_R$) and said normal ($U_2$),
- definition of the line of intersection ($D_5$) of the cutting plane ($A_4$) with the plane ($A_5$) of the element, the first reference direction ($T_R$) corresponding to the direction of this line of intersection.

9. Method according to claim 6 or 8, in combination with claim 2, **characterized in that** the second reference direction ($T'_R$, $T''_R$) at said projected point is obtained from a constraint grid by

- definition of a second projected point by normal projection of the point ($P'_5$) of the transfer element, on the constraint grid,
- calculation of the normalized weights at the second projected point of the element of the constraint grid of the four nodes of said element,
- weighting of the four constraint vectors by said normalized weights to obtain a vector ($D_1$) at said second projected point, the second reference direction ($T'_R$, $T''_R$) being obtained by projection of said vector at the projected point of the transfer element.

10. Method for the manufacture of parts made of composite materials by an automatic fiber layup machine, **characterized in that** the fiber trajectories for the laying up of plies by the layup machine are defined by the method according to one of claims 1 to 9.

**FIG. 1**

**FIG. 2**

**FIG. 3**

FIG. 4

FIG. 5

FIG. 7A

Analyse de courbure (m) - Trajectoires 90deg
Rosette Cartesienne

FIG. 7B

FIG. 6A

Analyse de courbure (m) – Trajectoires 0deg
Rosette Cartésienne

FIG. 6B

20

FIG. 8

grille de
vecteurs

Champ vectoriel

Génération de trajectoires

FIG. 9

FIG. 10

FIG. 11

FIG. 12

FIG. 14A

FIG. 14B

FIG. 13A

FIG. 13B

Analyse de courbure (m) – Trajectoires 90deg
Grille de vecteurs

Analyse de courbure (m) - Trajectoires 0deg
Grille de vecteurs

n courbes

Champ vectoriel

**FIG. 15**

Génération de trajectoires

33   34   3   32

31

P'$_2$   d$_6$   P$_2$   d$_5$
w$_6$           P"$_2$
                w$_5$

T$_6$   D$_2$   T$_5$

**FIG. 16**

**FIG. 17**

**FIG. 18**

FIG. 19

FIG. 20

303

FIG. 21

301

311

FIG. 22

Analyse de courbure (m) – Trajectoires 90deg
Grille de Déviation Angulaire

FIG. 23

Rosette

Surface de transfert

Champ vectoriel

Génération de trajectoires

**FIG. 24**

A₂

$U_1$

5

51

$P'_5$

$T'_R$

109

$D_4$

$P_5$

195

194

191

$A_3$

**FIG. 25**

FIG. 26A

FIG. 26B

FIG. 27

**FIG. 28**

**FIG. 29**

| Champ vectoriel 0° | Champ vectoriel 90° | Champ vectoriel +/- 45° |

| Analyse de cisaillement |

**FIG. 30**

**EP 3 000 003 B1**

## RÉFÉRENCES CITÉES DANS LA DESCRIPTION

**Documents brevets cités dans la description**

- EP 2538358 A1